# EUROPÄISCHE PATENTSCHRIFT

(11) **EP 1 115 547 B1**
(45) Veröffentlichungstag und Bekanntmachung des Hinweises auf die Patenterteilung: **27.11.2002**
(21) Anmeldenummer: 99969368.2
(22) Anmeldetag: 21.09.1999
(51) Int. Cl.: B29C 45/56, B29C 45/14

(54) **VERFAHREN ZUM HERSTELLEN VON BESCHICHTETEN KUNSTSTOFFFORMTEILEN**
METHOD FOR PRODUCING COATED PLASTIC MOULDED PARTS
PROCEDE DE PRODUCTION DE PIECES EN PLASTIQUE MOULEES ENDUITES

(30) Priorität: 24.09.1998 DE 19843921
(43) Veröffentlichungstag der Anmeldung: 18.07.2001
(73) Patentinhaber: Krauss-Maffei Kunststofftechnik GmbH, 80997 München (DE)
(72) Erfinder: KLOTZ, Bernd, D-85232 Günding (DE)
(74) Vertreter: Zollner, Richard
(86) Internationale Anmeldenummer: EP9906974
(87) Internationale Veröffentlichungsnummer: WO00016958

(56) Entgegenhaltungen:
- EP-A- 0 446 941
- EP-A- 0 477 967
- DE-A- 19 531 143
- FR-A- 2 329 434
- GB-A- 2 138 737
- PATENT ABSTRACTS OF JAPAN vol. 9, no. 264 (M-423), 22. Oktober 1985 (1985-10-22) & JP 60 110419 A (IDEMITSU SEKIYU KAGAKU KK), 15. Juni 1985 (1985-06-15)
- PATENT ABSTRACTS OF JAPAN vol. 18, no. 422 (M-1651), 8. August 1994 (1994-08-08) & JP 06 126773 A (MITSUBISHI RAYON CO LTD), 10. Mai 1994 (1994-05-10)

## Beschreibung

Die Erfindung bezieht sich auf ein Verfahren zum Herstellen von Verbund-Kunststofformteilen mit mindestens einer Beschichtungslage aus einem Bahnmaterial (Folien, Laminate, Gewebe, allgemein flächige Materialien) und einem Kunststoffkörper, wobei die Verbund-Kunststofformteile durch Spritzpressen hergestellt werden.

Derartige Kunststofformteile werden heutzutage beispielsweise für Möbel, Haushaltsgeräte etc. und in der Automobilindustrie für Türinnenverkleidungen, Armaturenbretter, Kofferraumverkleidungen, Sondenblenden etc. verwendet. Die beschichteten Flächen der Kunststofformteile bilden dabei die im montierten Zustand sichtbaren Flächen und sind unter ästhetischen Gesichtspunkten gestaltet, tragen Dekore und/oder haben bestimmte Oberflächenbeschaffenheiten wie farbliche Gestaltung, Oberflächenstruktur oder taktile Eigenschaften wie beispielsweise "Soft-Touch", d.h. eine gewisse Oberflächennachgiebigkeit, wofür häufig geschäumte Kunststoffmaterialien eingesetzt werden. Im folgenden werden derartige Beschichtungsmaterialien einschließlich Folien, geschäumter Kunststoffe, Dekormaterialien etc. allgemein als Bahnmaterialien bezeichnet. Da derartige Bahnmaterialien häufig sehr sensibel gegen Verform-ungen und Wärme reagieren, werden beim Hinterspritzen von Bahnmaterialien bei einem Spritzgießwerkzeug Prägewege bis zu 150 mm verwendet, um die Belastung auf das Bahnmaterial zu reduzieren.

Beispielsweise beschreibt die EP-0333198 B1 ein Verfahren zum Herstellen eines solchen Verbund-Kunststofformteils, bei dem das Bahnmaterial auf eine Formhälfte eines geöffneten Spritzgießwerkzeuges aufgelegt wird und anschließend die Form geschlossen wird, wobei während des Schließvorgangs plastifizierte Kunststoffmasse in die Form eingebracht wird. Dieses Verfahren soll verhindern, daß das Bahnmaterial durch die eingebrachte Kunststoffmasse beschädigt wird.

Einen anderen Weg schlägt die DE-19531143 C2 vor, die ebenfalls ein Verfahren zum Spritzgießen von Kunststofformteilen betrifft. Gemäß diesem Verfahren wird das Bahnmaterial in die offene Form eingelegt, die Form wird geschlossen und verformt das Bahnmaterial, und während des anschließenden Öffnungsvorgangs wird plastifizierte Kunststoffmasse in die sich öffnende Form eingebracht; nach dem Einbringen der plastifizierten Kunststoffmasse wird die Form geschlossen und die Kunststoffmasse im Formhohlraum verpreßt.

Die obengenannten Druckschriften betreffen jeweils sog. "Vertikalmaschinen", bei denen sich die Formhälften in vertikaler Richtung bewegen.

Eine sog. Horizontalmaschine, bei der sich dementsprechend die Formhälften in Horizontalrichtung bewegen, ist aus der DE-OS-2548318 bekannt. Bei einem in dieser Schrift ebenfalls beschriebenen Verfahren wird erwärmtes Bahnmaterial zwischen die Formhälften eingebracht, an eine der Formhälften wird Unterdruck angelegt, so daß das Bahnmaterial sich an die Formhälfteninnenwand anlegt, die Form wird bis auf einen Spalt geschlossen, anschließend wird plastifizierte Kunststoffmasse in den so etwas vergrößerten Formhohlraum eingespritzt und schließlich durch endgültiges Verschließen der Form im Formhohlraum verteilt.

Man ging bisher immer davon aus, daß größere Prägewege in einer Horizontalmaschine nicht realisiert werden können, weil der eingespritzte Kunststoffmassekuchen aufgrund von Gravitation nach unten fließt und somit nicht in einer gewünschten Verteilung vorliegt.

Demgegenüber liegt der Erfindung die Aufgabe zugrunde, ein Verfahren zum Spritzgießen von Verbund-Kunststofformteilen anzugeben, bei dem große Prägewege realisierbar sind und das sowohl auf Vertikal- als auch auf Horizontalmaschinen betreibbar ist.

Diese Aufgabe wird durch ein Verfahren gemäß Patentanspruch 1 gelöst; die abhängigen Ansprüche betreffen vorteilhafte Ausgestaltungen der Erfindung.

Erfindungsgemäß wird zunächst ein Bahnmaterial zwischen die Werkzeugformhälften eines geöffneten Spritzgießwerkzeuges eingelegt, das Werkzeug wird unter Vorformung des Bahnmaterials geschlossen, an eine Seite des Bahnmaterials wird Unterdruck angelegt und/oder Überdruck an die andere Seite des Bahnmaterials, so daß sich das Bahnmaterial an eine Formhälfte anschmiegt, und unter gesteuerter Öffnung des Spritzgießwerkzeuges bis zu einer vorgegebenen Stellung wird dosiert plastifizierte Kunststoffmasse in den Formhohlraum des Spritzgießwerkzeugs eingebracht, das Spritzgießwerkzeug wird vollständig geschlossen, und anschließend wird das Kunststofformteil aus der Form entnommen.

Um den Vorformgang des Bahnmaterials zu unterstützen, wird vorzugsweise das Bahnmaterial ganzflächig oder lokal vor dem Einbringen in die Form bzw. kurz vor dem Schließen der Formhälften erwärmt.

Die oben dargestellte Ansicht, daß große Prägewege bei Horizontalmaschinen bzw. bei sehr steil verlaufenden Formflanken in Vertikalmaschinen nicht realisiert werden können, beruht auf der Überlegung, daß beim Spritzgießen der Kunststoffmasse die Masse an der Formwandung abgeschreckt wird, wodurch sich eine "kalte Haut" bildet; diese kalte Haut haftet nicht an der Formwandung und rutscht somit bei steil verlaufenden Formwandungen ab.

Demgegenüber liegt der Erfindung die überraschende Erkenntnis zugrunde, daß beim Hinterspritzen vom Bahnmaterialien die eingespritzte Kunststoffmasse, der sog. Massekuchen, keine kalte Haut bildet, sondern am Bahnmaterial anhaftet und nicht fallen kann. Zusammen mit dem gesteuerten Öffnen der Form und der entsprechenden Dosierung der eingebrachten Kunststoffmasse können mit dem erfindungsgemäßen Verfahren auch bei sehr steil verlaufenden Flanken der Form oder in Horizontalmaschinen sehr große Formspalte realisiert werden.

Dabei wird vorzugsweise die Zufuhrrate der Kunststoffmasse und die Öffnungs- bzw. Schließbewegung des Spritzgießwerkzeugs abhängig voneinander und von der Form des Kunststoffformteils so gewählt, daß der Druck der Kunststoffmasse auf das Bahnmaterial weitgehend minimiert ist und sich die Kunststoffmasse im wesentlichen radial zur Einspritzstelle bewegt und über den gesamten Einspritzvorgang ein Quellfluß aufrechterhalten wird.

Vorzugsweise wird die Kunststoffmasse über einen Einspritzkanal oder mehrere Einspritzkanäle, abhängig von der Form des Kunststofformteils, eingespritzt.

Um den Quellfluß weiter zu unterstützen, kann auch während des Schließens der Formteile weiter Kunststoffmasse zugeführt werden.

Eine Ausführungsform der Erfindung wird anhand der beigefügten Zeichnungen erläutert. Es zeigen:
Fig. 1 ein Ablaufdiagramm zur Erläuterung des Schließ- bzw. Öffnungsablaufs bei einer Form eines Spritzgießwerkzeuges in Verbindung mit der Zufuhr von Kunststoffmasse über eine Extruderschnecke und
Fig. 2a bis 2h schematische Darstellungen der Formteile in verschiedenen Phasen des Spritzgießvorgangs.

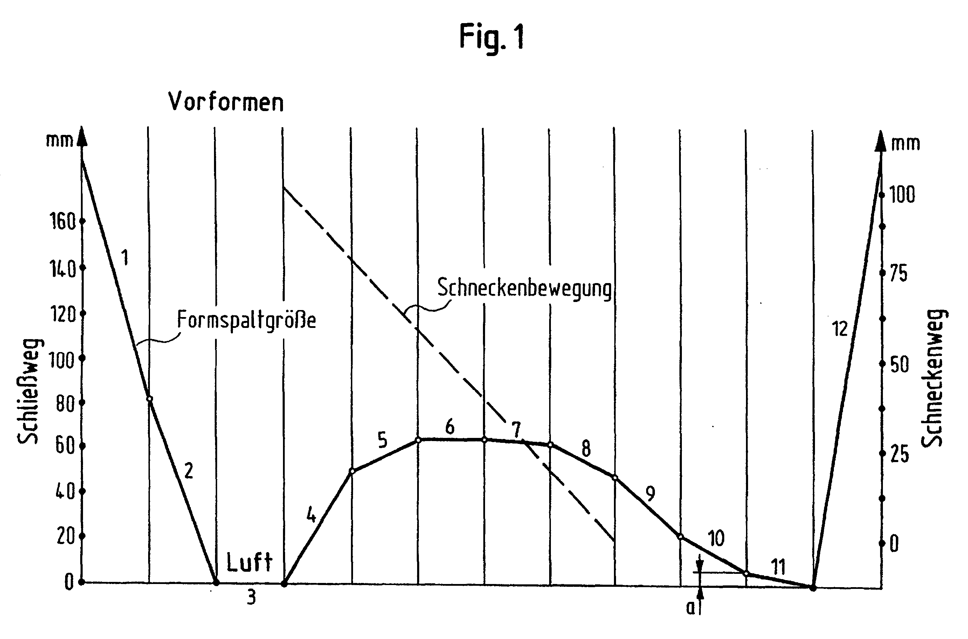

Das Ablaufdiagramm der Fig. 1 zeigt in schematisierter Form einen Zyklus des erfindungsgemäßen Spritzgießvorgangs anhand eines Graphen, der den Schließweg der Formhälften, d.h. die Formspaltgröße (Ordinate links) gegen die Zeit (Abszisse) in einer durchgezogenen Linie und den Schneckenweg (Ordinate rechts) gegen die Zeit in einer gestrichelten Linie darstellt. Die einzelnen Phasen des Spritzgießvorganges sind mit den Ziffern 1 bis 12 bezeichnet und werden später im Detail erläutert.

In einer Phase Null (nicht in Fig. 1 dargestellt) wird ein geeignetes Bahnmaterial (Dekormaterial, geschäumtes Kunststoffmaterial etc.) zugeschnitten, vollflächig oder auch partiell vorgewärmt, um die Elastizität des Bahnmaterials formteilabhängig zu gestalten und an den Prozeß anzupassen, und zwischen die Formteilhälften eingebracht.

In den Phasen 1 und 2 wird anschließend das Werkzeug geschlossen, und dann wird an eine Seite Unterdruck und/oder Überdruck an die andere Seite angelegt, wodurch am Ende der Phase 3 die Vorformung des Bahnmaterials abgeschlossen ist. In den Phasen 4 bis 7 wird die Form geöffnet, und gleichzeitig wird Kunststoffmasse zugeführt. Die Schließbewegung der Form beginnt in Phase 8 und wird bis zum Ende der Phase 11 aufrechterhalten, wobei auch während der Phase 8 fortgesetzt Kunststoffmasse zugeführt wird. Nach vollständigem Verschließen der Form und einer möglichen Abkühlzeit (nicht dargestellt) wird die Form in Phase 12 wieder geöffnet, das Kunststofformteilstück wird entfernt, und ein erneuter Zyklus beginnt.

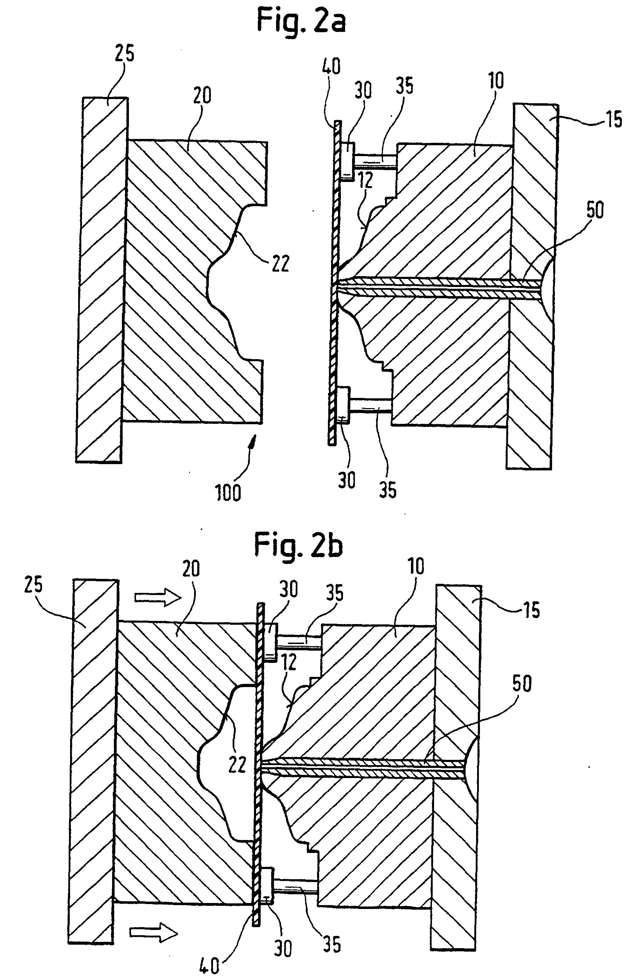

Fig. 2a zeigt schematisch zwei Werkzeugformhälften 10, 20 eines Spritzgießwerkzeuges 100 einer Horizontalmaschine. Wie allgemein bekannt ist und deshalb nicht im Detail dargestellt wird, umfaßt das Spritzgießwerkzeug eine feststehende Werkzeugformhälfte 20, die auf einem feststehenden Träger 25 montiert ist und eine Forminnenfläche 22 aufweist, und eine bewegliche Werkzeugformhälfte 10, die auf einen beweglichen Träger 15 montiert ist und einen Einspritzkanal 50 für die einzubringende Kunststoffmasse aufweist, der an einer Form-innenfläche 12 endet. Die Forminnenflächen 12 und 22 bilden im geschlossenen Zustand der Form die Kavität zur Ausbildung des Kunststofformteils. Wie bereits erwähnt, wird vorgeschnittenes Bahnmaterial erwärmt, beispielsweise mit einem Infrarotstrahler, und als Bahnmaterial 40, beispielsweise über einen Greifroboter, auf einem Spannrahmen 30 an der Formteilhälfte 10 des geöffneten Werkzeugs abgelegt. Dort wird es durch bekannte Maßnahmen (beispielsweise Klammerelemente, Greifelemente oder Unterdruck) auf dem Spannrahmen 30 beispielsweise mit einem Infrarotstrahler gehalten. Damit ist der vorgenannte Ablaufschritt 0 abgeschlossen.

Im anschließenden Ablaufschritt 1 (Fig. 2b) wird das Werkzeug geschlossen, bis der Spannrahmen 30 das Bahnmaterial 40 an eine Anlagefläche der gegenüberliegenden Werkzeugformhälfte (Matrize) 20 preßt.

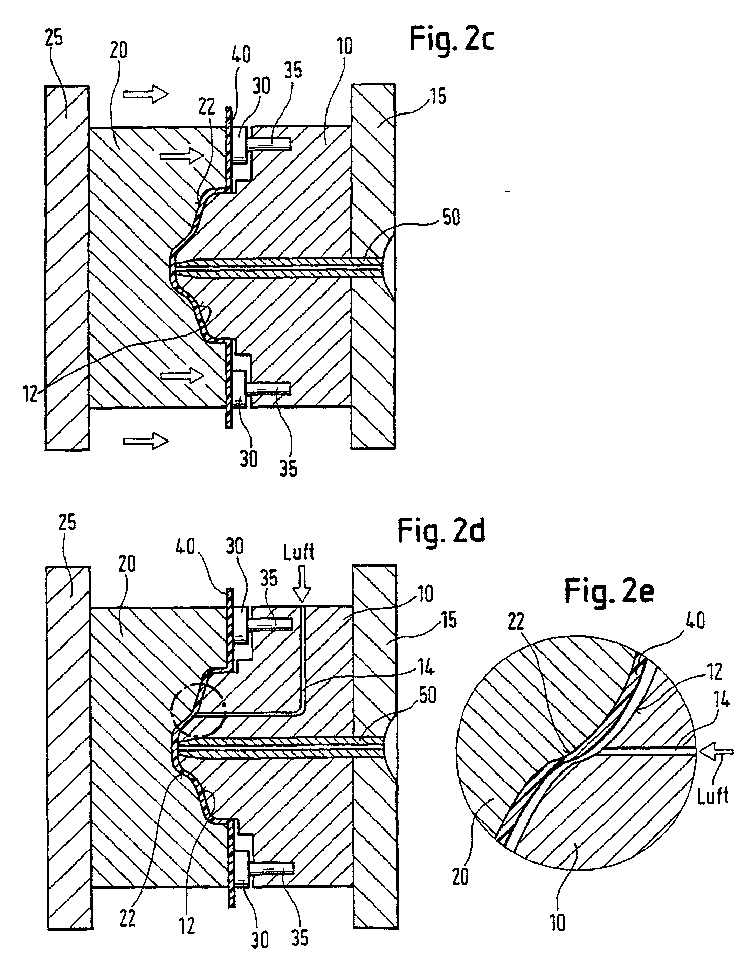

Durch Weiterbewegen der Formteilhälfte 10 (Patrize) wird eine mechanische Vorformung des Bahnmaterials durch die Formhälften bis zum vollständigen Verschließen der Form durchgeführt. Dieser Zustand ist in Fig. 2c dargestellt, aus der ferner ersichtlich ist, daß Trägerelemente 35 für den Spannrahmen 30 entsprechend dem erforderlichen Schließweg in Bezug auf die Patrize 10 versenkbar sind. Durch die Anlage des Spannrahmens 30 an der Anlagefläche der Matrize 20 wird eine Faltenbildung des Bandmaterials 40 entgegengewirkt.

Bei vollständig geschlossener Form füllt das Bahnmaterial 40 die Kavität der Form nicht vollständig aus, da hier später noch Kunststoffmasse einzubringen ist. Aufgrunddessen wird ein pneumatisches Vorformen im vorgenannten Ablaufschritt 3 vorgenommen. Während des Schließvorgangs (bis 2) oder bei vollständig geschlossenem Werkzeug (bis 3), wird über einen oder mehrere Luftkanäle 14 von der einen Seite Überdruck angelegt und/oder über Vakuumdüsen (nicht dargestellt) von der anderen Seite Unterdruck, um den Vorformgang zu unterstützen, so daß es möglich ist, das Bahnmaterial 40 (je nach Erfordernissen) vollständig auf die Forminnenfläche 22 der Kavität zu drücken. Dies ist insbesondere aus der Fig. 2d zusammen mit der Detailansicht der Fig. 2e ersichtlich. Die bleibende Verformung der Materialbahn wird über die Zeitdauer der Ablaufschritte 2 bis 3 eingestellt. Wird nur eine elastische Verformung benötigt, kann die Zeitdauer der Ablaufschritte 2 bis 3 auf ein Minimum reduziert werden.

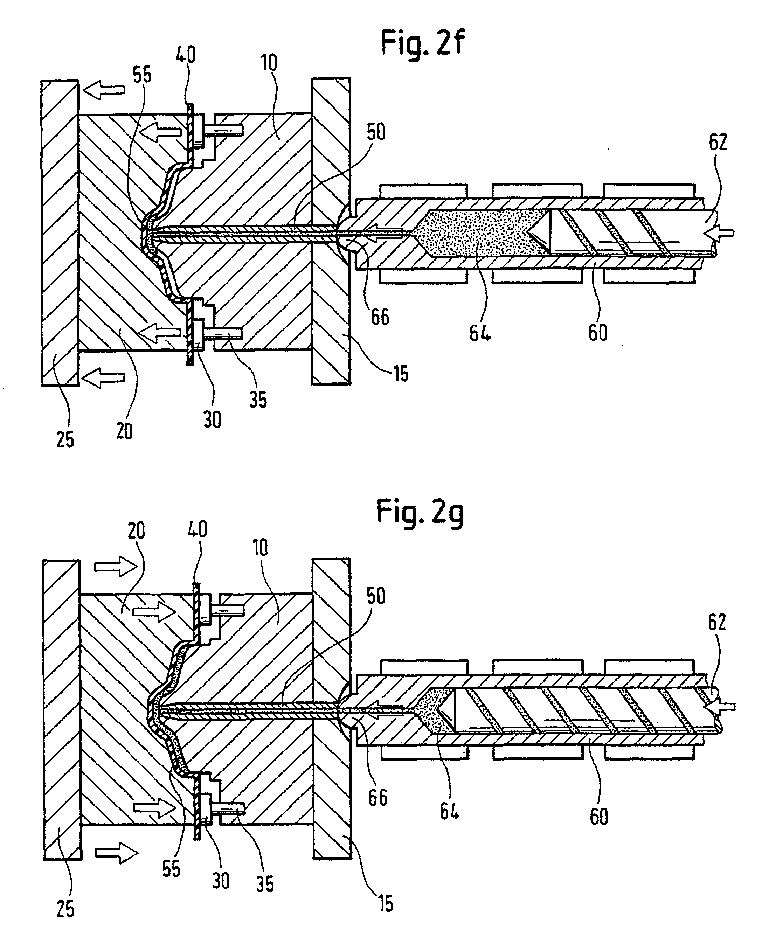

An die Ablaufschritte 2 bis 3 schließen sich die Ablaufschritte 4 bis 7 des Ablaufdiagramms der Fig. 1 an, bei denen Kunststoffmasse in das sich öffnende Werkzeug eingebracht wird. Dies ist schematisch in der Fig. 2f dargestellt. Fig. 2f zeigt neben den bereits erläuterten Elementen schematisch eine Extrudervorrichtung 60 mit einer Extruderschnecke 62, in der Kunststoffmaterial plastifiziert und in einem Sammelraum 64 gesammelt wird und anschließend über eine Extruderdüse 66 in den oder die Einspritzkanäle 50 der Werkzeugformhälfte 10 eingespritzt wird. Mit dem Beginn des Ablaufschrittes 4 wird der Einspritzprozeß der Kunststoffmasse gestartet und gleichzeitig das Spritzgießwerkzeug mit programmierbar frei einstellbaren Geschwindigkeiten bis zu einem regelbaren Prägeweg (bis zum Ablaufschritt 5) geöffnet. Die Kunststoffmasse wird durch einen oder mehrere Anspritzpunkte eingespritzt und dosiert, so daß ein oder mehrere Massenkuchen gebildet werden. Die Größe der Massenkuchen wird über die Öffnungsdauer der Anspritzpunkte definiert. Es erfolgt eine dem Formteil angepaßte Massendosierung. Dieser Vorgang wird durchgeführt, weil der einströmende Massenkuchen frühzeitig über die Klebewirkung zum Bahnmaterial gehalten werden muß und die Druckbelastung auf das Bahnmaterial durch die Öffnungsbewegung minimiert wird.

Die unterschiedlichen Steigungen des Graphen des Schließweges in Fig. 1 in den Schritten 4, 5, 6 und 7 zeigen an, daß bei gleichbleibender Zufuhrrate der Kunststoffmasse (gleichbleibende Steigung des Graphen des Schneckenweges in Fig. 1; gestrichelte Linie) die Geschwindigkeiten der Formöffnung unterschiedlich sind. Das heißt, in der Phase 4 ist die Formöffnungsgeschwindigkeit relativ groß, nimmt in der Phase 5 ab und wird in den Phasen 6 und 7 zu Null. Dies beruht darauf, daß dem sich ausbreitenden Kunststoffkuchen mit zunehmendem Radius vom Anspritzpunkt bei flachen Werkstücken ein immer größerer Hohlraum zur Verfügung steht.

Durch diese Verfahrensführung wird sichergestellt, daß die Kunststoffmasse einerseits am Bahnmaterial 40 anhaftet, andererseits an der Formhälfte 10 und sich nach allen Seiten radial zum Anspritzpunkt ausdehnt, so daß ein Abfallen des Kunststoffkuchens verhindert wird und Quellfluß aufrechterhalten wird.

Grundsätzlich ist es auch möglich, die Formöffnungsgeschwindigkeit konstant zu halten und die Einspritzrate entsprechend zu steuern, auch können beide Größen kombiniert geändert werden. Die Dosierung sollte dabei so erfolgen, daß sich die Kunststoffmasse im wesentlichen radial zum Anspritzpunkt ausbreitet. In der Praxis gehen noch weitere Parameter in die Steuerung/Regelung einer Maschine ein, beispielsweise die Viskosität der Kunststoffmasse, die konkrete Form der Kavität etc. Geeignete Vorgaben für die verschiedenen, untereinander abhängigen Parameter werden deshalb beim Einrichten einer Maschine durch Probeläufe und/oder Berechnungen ermittelt.

Im Ablaufschritt 8 der Fig. 1 wird Einspritzen in das schließende Werkzeug durchgeführt. Das heißt, noch während des Einspritzens der Kunststoffmasse wird ein Verprägen des Massekuchens bzw. der Massekuchen mit definierten Prägegeschwindigkeiten und Prägedrücken gestartet. Auf diese Weise werden die Fließfronten in der Kavität ständig in Bewegung gehalten mit dem Ziel einer möglichst konstanten Geschwindigkeit der Fließfronten. Fig. 2g zeigt den Zustand des Werkzeugs am Ende des Ablaufschritts 8.

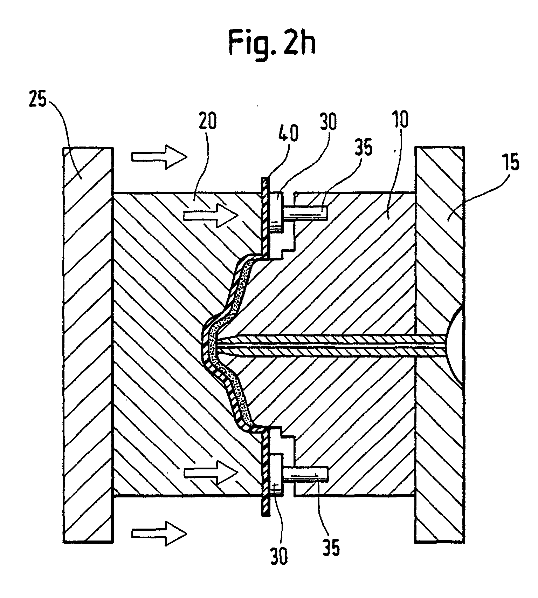

In den Ablaufschritten 9 und 10 wird über eine weitere Schließung des Werkzeugs ein Werkzeugprägevorgang bis zur vollständigen Füllung der Kavität vorgenommen, wie schematisch in Fig. 2h dargestellt ist, bis ein Restöffnungsspalt a (vgl. Fig. 1) verbleibt.

Im Ablaufschritt 11 wird eine Schwindungsbeseitigung durchgeführt; mittels der weiterhin wirkenden Prägekraft und des verbleibenden Restöffnungsspaltes a wird die Materialschwindung egalisiert. Gegen Ende des Ablaufschritts 11 ist das Werkzeug nahezu oder gerade geschlossen und kann geöffnet werden (vgl. Fig. 2h), evtl. nach einer Abkühlzeit.

Schließlich wird im Ablaufschritt 12 das Werkzeug wieder geöffnet, das geformte Kunststofformteil wird entfernt, ein neues Bahnmaterial wird eingebracht, und der Zyklus beginnt von vorn.

Bei dem erfindungsgemäßen Verfahren werden Zykluszeiten von etwa 60 sec erreicht, wobei die Kunststoffmasse beispielsweise eine Temperatur von ca. 200°C hat und das Bahnmaterial beispielsweise auf 40°C erwärmt wird. Diese Erwärmung hat eine bessere Formbarkeit des Bahnmaterials zur Folge, das sich dementsprechend besser an die Konturen der Forminnenfläche anpassen kann. Es handelt sich hierbei also nicht notwendigerweise um einen Tiefziehvorgang, bei dem das Bahnmaterial direkt nach dem Andrücken an die Forminnenhälfte erstarrt und in dieser Form verbleibt. Je nach Anwendungszweck können jedoch auch andere Temperaturen bis beispielsweise 200° eingesetzt werden, so daß im Extremfall das Bahnmaterial im Schritt 3 plastisch verformt wird.

Wie bereits eingangs erwähnt, ist das erfindungsgemäße Verfahren insbesondere bei thermisch isolierenden Bahnmaterialien vorteilhaft, beispielsweise bei geschäumten Kunststoffen. Auch ist es nicht notwendig, daß das Bahnmaterial ein einlagiges Material ist, dieses Material kann ebenfalls ein Verbundmaterial aus mehreren Lagen sein. Dabei könnte daran gedacht werden, einer Lage des Bahnmaterials, die zu Dekorzwecken dient, eine weitere thermisch isolierende Lage zuzufügen, um den erfindungsgemäßen Effekt weiter zu verbessern.

Im Diagramm der Fig. 1 sind exemplarisch Schließwege bis über 160 mm dargestellt, abhängig von den verwendeten Materialien können jedoch auch andere Schließwege, größer (bis über 200 mm) oder kleiner, eingesetzt werden.

## Patentansprüche

1. Verfahren zum Herstellen eines Verbund-Kunststoffformteils aus mindestens einer Lage eines Bahnmaterials und einem Kunststoffkörper mit einem Spritzgießwerkzeug mit zwei Werkzeugformhälften mit den Schritten:
a) Einlegen eines thermisch isolierenden Bahnmaterials zwischen die Werkzeugformhälften des geöffneten Spritzgießwerkzeugs,
b) Schließen des Spritzgießwerkzeugs unter Verformung des Bahnmaterials,
c) Anlegen von Unterdruck an eine Seite des Bahnmaterials und/oder Anlegen von Überdruck an dessen andere Seite,
d) Einbringen von plastifizierter Kunststoffmasse in den Formhohlraum des Spritzgießwerkzeugs und gleichzeitiges Öffnen des Spritzgießwerkzeugs bis zu einer vorgegebenen Stellung, wobei die Zuflussrate der Kunststoffmasse und die Öffnungsgeschwindigkeit des Spritzgießwerkzeuges aufeinander abgestimmt sind,
e) Beibehalten eines festen Öffnungsspaltes und fortgesetztes Einbringen von Kunststoffmasse in den Formhohlraum,
f) Schließen des Spritzgießwerkzeugs,
g) Entnehmen des Kunststoffformteils.

2. Verfahren nach Anspruch 1,
**dadurch gekennzeichnet, dass** die Zuflussrate und die Öffnungsgeschwindigkeit so aufeinander abgestimmt sind, dass sich die Kunststoffmasse in dem Formhohlraum im wesentlichen kreisförmig oder radial nach allen Seiten um eine Anspritzstelle ausdehnt.

3. Verfahren nach Anspruch 1 oder 2, dadurch **gekennzeichnet,** dass mindestens während des Beginns des Schließvorgangs im Schritt f) fortgesetzt Kunststoffmasse in den Formhohlraum eingebracht wird.

4. Verfahren nach einem der Ansprüche 1 bis 3,
**dadurch gekennzeichnet, dass** das Bahnmaterial vor oder nach der Einbringung zwischen die Werkzeugformhälften ganzflächig oder lokal erwärmt wird.

5. Verfahren nach einem der Ansprüche 1 bis 4,
**dadurch gekennzeichnet, dass** die Kunststoffmasse über einen oder mehrere Anspritzkanäle eingebracht wird.

6. Verfahren nach Anspruch 5,
**dadurch gekennzeichnet, dass** die Zuflussrate der Kunststoffmasse und die Öffnungs- und Verschließbewegung des Spritzgießwerkzeugs abhängig voneinander und von der Form des Kunststoffformteils so gewählt werden, dass Quellfluss aufrechterhalten wird.

7. Verfahren nach einem der Ansprüche 1 bis 6,
**dadurch gekennzeichnet, dass** das Bahnmaterial aufgeschäumten Kunststoff aufweist.

8. Verfahren nach einem der Ansprüche 1 bis 6,
**dadurch gekennzeichnet, dass** die Zuflussrate der Kunststoffmasse und die Öffnungs- und Verschließbewegung des Spritzgußwerkzeugs abhängig voneinander und von der Form des Kunststoffformteils so gewählt werden, dass der Druck der Kunststoffmasse auf das Bahnmaterial minimiert ist.

9. Verfahren nach einem der Ansprüche 1 bis 8,
**dadurch gekennzeichnet, dass** die Werkzeugformhälften die Öffnungs- und Schließbewegungen in Horizontalrichtung durchführen.

10. Verfahren nach einem der vorstehenden Ansprüche,
**dadurch gekennzeichnet, dass** das Bahnmaterial auf eine Temperatur von unter 200°C vorgeheizt wird, vorzugsweise im Bereich von 40 bis 60°C.

## Claims

1. Method for producing a composite plastic moulded part from at least one layer of a web material and a plastic body with an injection mould with two mould halves with the steps:
a) inserting a thermally insulating web material between the mould halves of the opened injection mould,
b) closing the injection mould with deformation of the web material,
c) applying a vacuum to one side of the web material and/or applying excess pressure to the other side thereof,
d) introducing plasticized polymer melt into the cavity of the injection mould and simultaneously opening the injection mould to a predetermined position, the flow rate of the polymer melt and the opening speed of the injection mould being synchronised with one another,
e) keeping a fixed opening gap and continued introduction of polymer melt into the mould cavity,
f) closing the injection mould,
g) removing the plastic moulded part.

2. Method according to claim 1, **characterised in that** the flow rate and the opening speed are synchronised with one another in such a way that the polymer melt expands in the mould cavity substantially circularly or radially to all sides around an injection point.

3. Method according to claim 1 or 2, **characterised in that** at least during the beginning of the closing process in step f) polymer melt is continuously introduced into the mould cavity.

4. Method according to any one of claims 1 to 3, **characterised in that** the web material is heated over the entire face or locally prior to or following introduction between the mould halves.

5. Method according to any one of claims 1 to 4, **characterised in that** the polymer melt is introduced via one or more runners.

6. Method according to claim 5, **characterised in that** the flow rate of the polymer melt and the opening and closing movement of the injection mould are selected independently of one another and from the shape of the plastic moulded part in such a way that a laminar flow is maintained.

7. Method according to any one of claims 1 to 6, **characterised in that** the web material comprises foamed plastics material.

8. Method according to any one of claims 1 to 6, **characterised in that** the flow rate of the polymer melt and the opening and closing movement of the injection mould are selected independently of one another and of the shape of the plastic moulded part in such a way that the pressure of the polymer melt on the web material is minimised.

9. Method according to any one of claims 1 to 8, **characterised in that** the mould halves carry out the opening and closing movements in the horizontal direction.

10. Method according to any one of the preceding claims, **characterised in that** the web material is preheated to a temperature of below 200°C, preferably in the range of 40 to 60°C.

## Revendications

1. Procédé de production d'une pièce moulée en plastique composée à partir d'au moins une couche d'un matériau en feuille continue et d'un corps en plastique avec un outil d'injection ayant deux moitiés de formage d'outil comprenant les étapes suivantes :
a) insertion d'un matériau en feuille continue isolant thermiquement entre les moitiés de formage d'outil de l'outil d'injection ouvert ;
b) fermeture de l'outil d'injection avec déformation du matériau en feuille continue ;
c) réalisation d'une dépression sur un côté du matériau en feuille continue et/ou réalisation d'une surpression sur son autre côté ;
d) dépôt d'une masse plastique plastifiée dans l'espace de formage de l'outil d'injection et ouverture simultanée de l'outil d'injection jusqu'à une position prédéterminée, le débit d'écoulement de la masse plastique et la vitesse d'ouverture de l'outil d'injection étant synchronisés entre eux ;
e) maintien d'une fente d'ouverture fixe et poursuite du dépôt de la masse plastique dans l'espace de formage ;
f) fermeture de l'outil d'injection ;
g) démoulage de la pièce formée en plastique.

2. Procédé selon la revendication 1, **caractérisée en ce que** le débit d'écoulement et la vitesse d'ouverture sont synchronisés entre eux de telle sorte que la masse plastique s'étend dans l'espace de formage essentiellement en forme de cercle ou en direction radiale vers tous les côtés aùtour d'un endroit d'injection.

3. Procédé selon l'une des revendications 1 ou 2, **caractérisé en ce qu'**au moins pendant le début de l'opération de fermeture de l'étape f), une masse plastique continue d'être introduite dans l'espace de formage.

4. Procédé selon l'une des revendications 1 à 3, **caractérisé en ce que** le matériau en feuille continue est chauffé sur toute sa surface ou localement avant ou après l'introduction entre les moitiés de formage de l'outil.

5. Procédé selon l'une des revendications 1 à 4, **caractérisé en ce que** la masse plastique est introduite par le biais d'un ou de plusieurs canaux d'injection.

6. Procédé selon la revendication 5, **caractérisé en ce que** le débit d'écoulement de la masse plastique et le mouvement d'ouverture et de fermeture de l'outil d'injection sont déterminés en fonction l'un de l'autre et de la forme de la pièce en plastique moulée de telle sorte qu'un écoulement de gonflement est maintenu.

7. Procédé selon l'une des revendications 1 à 6, **caractérisé en ce que** le matériau en feuille continue comprend du plastique moussé.

8. Procédé selon l'une des revendications 1 à 6, **caractérisé en ce que** le débit d'écoulement de la masse plastique et le mouvement d'ouverture et de fermeture de l'outil d'injection sont déterminés en fonction l'un de l'autre et de la forme de la pièce en plastique moulée de telle sorte que la presse de la masse plastique sur le matériau en feuille continue est minimisée.

9. Procédé selon l'une des revendications 1 à 8, **caractérisé en ce que** les moitiés de formage de l'outil effectuent les mouvements d'ouverture et de fermeture en direction horizontale.

10. Procédé selon l'une des revendications précédentes, **caractérisé en ce que** le matériau en feuille continue est préchauffée à une température inférieure à 200° C, de préférence de l'ordre de 40 à 60° C.
